# EUROPÄISCHE PATENTSCHRIFT

(11) **EP 3 265 424 B1**
(45) Veröffentlichungstag und Bekanntmachung des Hinweises auf die Patenterteilung: **09.12.2020**
(21) Anmeldenummer: 16707426.9
(22) Anmeldetag: 01.03.2016
(51) Int. Cl.: C01B 32/956, C08J 5/00, C08J 5/04, C01B 32/984, C03C 14/00

(54) **VERFAHREN ZUM HERSTELLEN EINES FASERVERSTÄRKTEN TRANSPARENTEN KOMPOSITWERKSTOFFS UND TRANSPARENTER FASERVERSTÄRKTER KOMPOSITWERKSTOFF**
A FIBRE-REINFORCED TRANSPARENT COMPOSITE MATERIAL AND METHOD FOR PRODUCING SAME
PROCÉDÉ POUR FABRIQUER UN MATÉRIAU COMPOSITE TRANSPARENT RENFORCÉ PAR DES FIBRES ET MATÉRIAU COMPOSITE TRANSPARENT RENFORCÉ PAR DES FIBRES

(30) Priorität: 02.03.2015 DE 102015102953
(43) Veröffentlichungstag der Anmeldung: 10.01.2018
(73) Patentinhaber: Universität Paderborn, 33098 Paderborn (DE)
(72) Erfinder: GREULICH-WEBER, Siegmund, 33175 Bad Lippspringe (DE)
(74) Vertreter: Michalski Hüttermann & Partner Patentanwälte mbB
(86) Internationale Anmeldenummer: PCT/EP2016/054295
(87) Internationale Veröffentlichungsnummer: WO 2016/139195

(56) Entgegenhaltungen:
- WO-A2-2008/040333
- US-A- 4 717 589
- MENG G W ET AL: "Growth and characterization of nanostructured beta-SiC via carbothermal reduction of SiO2 xerogels containing carbon nanoparticles", JOURNAL OF CRYSTAL GROWTH, ELSEVIER, AMSTERDAM, NL, Bd. 209, Nr. 4, 1. Februar 2000 (2000-02-01), Seiten 801-806, XP004198405, ISSN: 0022-0248, DOI: 10.1016/S0022-0248(99)00435-2
- MENG G W ET AL: "FORMATION OF SS-SIC NANORODS WITH AMORPHOUS SIO2 WRAPPING LAYERS", JOURNAL OF MATERIALS SCIENCE LETTERS, CHAPMAN AND HALL LTD. LONDON, GB, Bd. 18, Nr. 15, 1. August 1999 (1999-08-01), Seiten 1255-1257, XP000849744, ISSN: 0261-8028, DOI: 10.1023/A:1006664000217
- S. GREULICH-WEBER ET AL: "Textile Solar Cells Based on SiC Microwires", MATERIALS SCIENCE FORUM, Bd. 615-617, 2. März 2009 (2009-03-02), Seiten 239-242, XP055272970, DOI: 10.4028/www.scientific.net/MSF.615-617.239
- B. FRIEDEL ET AL: "Sol-Gel Silicon Carbide for Photonic Applications", MATERIALS SCIENCE FORUM, Bd. 527-529, 15. Oktober 2006 (2006-10-15) , Seiten 759-762, XP055241807, DOI: 10.4028/www.scientific.net/MSF.527-529.759

## Beschreibung

Die vorliegende Erfindung betrifft ein Verfahren zum Herstellen eines faserverstärkten Kompositwerkstoffs und zum Herstellen eines faserverstärkten Bauteils. Die vorliegende Erfindung betrifft ferner einen faserverstärkten Kompositwerkstoff und ein faserverstärktes Bauteil, wobei der Faserwerkstoff eine hohe Transparenz aufweist.

Es ist weitgehend bekannt, etwa um eine Strukturverstärkung zu ermöglichen und dadurch die Stabilität von verschiedensten Bauteilen zu verbessern, faserverstärkte Werkstoffe zu verwenden. Problematisch ist dies insbesondere bei transparenten Materialien, da die Transparenz durch die Verstärkungsfasern negativ beeinflusst werden kann. Dies verhindert oder erschwert bislang beispielsweise eine Verwendung von Siliziumcarbidfasern für eine Faserverstärkung transparenter Materialien, da oftmals noch anhaftender Kohlenstoff aus der Herstellung der Fasern die Transparenz trüben kann.

Aus dem Dokument EP 0 095 433 ist es beispielsweise bekannt, eine Glasfaserkeramik durch Silizumcarbidfasern mit einer Strukturverstärkung zu versehen. Die Herstellung derartiger Keramiken erfolgt dabei unter Reaktion der Siliziumcarbidfasern mit bestimmten Metallionen, um so eine Diffusionsschutzschicht auf der Oberfläche der Siliziumcarbidfasern zu erzeugen. In diesem Dokument wird jedoch nicht auf transparente Materialien abgestellt, vielmehr sollen Farbstoffe zugegeben werden. Ein Verfahren zum Herstellen transparenter Siliziumcarbidfasern wird in diesem Dokument nicht offenbart.

Das Dokument EP 2 674 297 A1 beschreibt ferner eine Faser für einen Kompositartikel. Eine derartige Faser weist einen Faserkörper auf, der durch eine Matrix-Lage beschichtet ist. Zwar ist beschrieben, dass derartige Kompositartikel neben nicht-transparenten Anwendungen auch im Wesentlichen transparente Eigenschaften aufweisen können, jedoch sind keine vollständig transparenten Fasern beschrieben, weshalb die Transparenz derartiger herkömmlicher Fasern noch Verbesserungspotential bietet. Die Herstellung der Fasern insbesondere in hoch transparentem Zustand ist auch in diesem Dokument nicht beschrieben.

Aus dem Dokument EP 0 453 704 A2 ist weiterhin bekannt, Glas oder Glaskeramik-Kompositwerkstoffe durch die Anwendung von Fasern zu verstärken. Als Verstärkungsfasern werden in diesem Dokument Siliziumnitridfasern verwendet. Diese sollen herkömmliche Siliziumcarbidfasen ersetzen.

Das Dokument US 4,485,179 beschreibt ferner eine Glaskeramik, die mit Siliziumcarbidfasern verstärkt ist. Die Verstärkungsfasern reagieren mit Tantal- oder Niob-Komponenten, um eine Diffusionsbarriere um die Fasern zu erzeugen. Auch in diesem Dokument wird nicht auf transparente Materialien abgestellt. Ein Verfahren zum Herstellen transparenter Siliziumcarbidfasern wird in diesem Dokument nicht offenbart.

Das Dokument US 4,755,489 beschreibt ferner Glaskeramikmaterialien, die durch Siliziumcarbidfasern faserverstärkt sind. Auch in diesem Dokument wird nicht auf transparente Materialien abgestellt. Ein Verfahren zum Herstellen transparenter Siliziumcarbidfasern wird in diesem Dokument nicht offenbart.

Das Dokument US 4,460,639 beschreibt ferner Glaskeramikmaterialien, die durch Siliziumcarbidfasern faserverstärkt sind. Die Verstärkungsfasern werden dabei mit einem Harz imprägniert. Auch in diesem Dokument wird nicht auf transparente Materialien abgestellt. Ein Verfahren zum Herstellen transparenter Siliziumcarbidfasern wird in diesem Dokument nicht offenbart, vielmehr werden erwerbliche Fasern verwendet.

In dem Dokument "The Generation of Multiple Matrix Cracking and Fibre-Matrix Interfacial Debonding in a Glas Composite, Y. Sun et al., Acta mater. Vol. 46, Nr. 5, Seiten 1657-1667, 1998, werden Untersuchungen bezüglich des Bruchverhaltens von faserverstärkten Keramiken beschrieben. Hierzu werden Siliziumcarbidfasern in einer transparenten Glaskeramik verwendet, wobei die Siliziumcarbidfasern einen Kohlenstoffkern aufweisen, auf welchem Siliziumcarbid abgeschieden ist. Daher scheinen diese Fasern nicht transparent zu sein, ferner handelt es sich bei den Fasern nicht um reines Siliziumcarbid.

US 4,717,589 beschreibt ein Verfahren zum Erzeugen eines Glas-Kompositwerkstoffs, welcher Siliziumcarbidfasern in einer Glasmatrix aufweist. Dabei werden Siliziumcarbidfasern auf bestimmte Weise in geschmolzenes Glas eingebracht. Der Vorteil dieses Verfahrens soll darin liegen, dass bevorzugte Eigenschaften erhalten werden können, wie hohe Hitzebeständigkeit, Oxidationsbeständigkeit, Stabilität und Bruchsicherheit.

In diesem Dokument wird jedoch nicht auf die Herstellung der Siliziumcarbidfasern eingegangen. Auch wird trotz einer Glasmatrix nicht offenbart, dass die Siliziumcarbidfasern eine besonders hohe Transparenz aufweisen sollen.

G. W. Meng et al., Growth and characterization of nanostructured β-SiC via carbothermal reduction of SiO2 xerogels containing carbon naoparticles, Journal of Crystal Growth 209, (2000), 801-806, beschreibt ein Verfahren zum Herstellen von nanostrukturiertem Siliziumcarbid, wie etwa von Siliziumcarbid-Nanoröhren. Diese werden hergestellt durch eine carbothermale Reduktion eines Xerogels, das wiederum durch eine Sol-Gel-Synthese ausgehend von Tetraethoxysilan (TEOS) und Kohlenstoff erzeugt wird. Durch die Wahl der Bedingungen bei der carbothermalen Reduktion kann gesteuert werden, ob Siliziumcarbid-Pulver, Siliziumcarbid-Nanodrähte mit Siliziumdioxidbeschichtung, oder freie Siliziumcarbid-Nanodrähte entstehen.

G. W. Meng et al., Formation of β-SiC nanorods with amorphous SiO2 wrapping layers, Journal of Material Science Letters 18, (1999), 1255-1257, beschreibt ein Verfahren zum Herstellen von Siliziumcarbid-Nanoröhren. Diese werden hergestellt durch eine carbothermale Reduktion eines Xerogels, das wiederum durch eine Sol-Gel-Synthese ausgehend von Tetraethoxysilan (TEOS) und Kohlenstoff erzeugt wird.

Somit ist im Stand der Technik zwar grundsätzlich die Verwendung von Siliziumcarbid als Verstärkungsfasern beschrieben, jedoch offenbart keines der vorgenannten Dokumente eine Herstellung von hoch-transparenten Siliziumcarbidfasern. Grundsätzlich liegt der Fokus bei den vorgenannten Dokumenten nicht auf der Herstellung der Siliziumcarbidfasern, sondern insbesondere auf deren Einsatz und Weiterverarbeitung.

Es besteht daher noch weiterhin Verbesserungspotential bei der Herstellung von transparenten Verstärkungsfasern für transparente Matrixmaterialien. Insbesondere besteht weiteres Verbesserungspotential hinsichtlich der Transparenz der Verstärkungsfasern.

Es ist daher die Aufgabe der vorliegenden Erfindung, eine Lösung zu schaffen, durch welche auf kostengünstige Weise Verstärkungsfasern geschaffen werden können, die eine gute Transparenz bei gleichzeitig guten mechanischen Eigenschaften aufweisen.

Die Lösung der Aufgabe erfolgt erfindungsgemäß durch ein Verfahren zum Herstellen eines faserverstärkten transparenten Kompositwerkstoffs mit den Merkmalen des Anspruchs 1. Die Lösung der Aufgabe erfolgt ferner durch ein Verfahren zum Herstellen eines transparenten Bauteils mit den Merkmalen des Anspruchs 7. Die Lösung der Aufgabe erfolgt ferner durch einen Kompositwerkstoff mit den Merkmalen gemäß Anspruch 8 und ein Bauteil mit den Merkmalen gemäß Anspruch 13. Die Lösung der Aufgabe erfolgt ferner durch eine Verwendung nach Anspruch 15. Bevorzugte Ausgestaltungen der Erfindung sind in den Unteransprüchen, in der Beschreibung, in der Figur und dem Beispiel offenbart, wobei weitere in den Unteransprüchen oder in der Beschreibung oder der Figur oder dem Beispiel beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Es wird ein Verfahren zum Herstellen eines faserverstärkten transparenten Kompositwerkstoffs vorgeschlagen, aufweisend die Verfahrensschritte:
a) Bereitstellen einer Werkstoffmatrixschmelze; und
b) Erzeugen von Verstärkungsfasern, wobei Verfahrensschritt b) die Verfahrensschritte aufweist:
   b1) Bereitstellen eines Gemisches mit einer Siliziumquelle und einer Kohlenstoffquelle, wobei die Siliziumquelle und die Kohlenstoffquelle gemeinsam in Partikeln eines Feststoffgranulats vorliegen;
   b2) Behandeln des in Verfahrensschritt b1) bereitgestellten Gemisches mit einer Temperatur in einem Bereich von ≥ 1400°C bis ≤ 2000°C, insbesondere in einem Bereich von ≥ 1650°C bis ≤ 1850°C; unter Erzeugung von Verstärkungsfasern mit einer Dicke in einem Bereich von ≥ 0,1 µm bis ≤ 2µm; wobei die Verstärkungsfasern aus Siliziumcarbid ausgebildet sind, wobei das Siliziumcarbid einkristallines 3C-SiC oder 6H-SiC ist, wobei das Verfahren die weiteren Verfahrensschritte aufweist:
c) Einbringen der Verstärkungsfasern in die Werkstoffschmelze derart, dass die Verstärkungsfasern in einer Menge von ≥ 2 Vol.-% bis ≤ 60 Vol.-% vorliegen; und
d) gegebenenfalls Abkühlen der Werkstoffschmelze unter Ausbildung eines transparenten Kompositwerkstoffes.

Durch ein vorbeschriebenes Verfahren lässt sich ein faserverstärkter Kompositwerkstoff schaffen, welcher mit Bezug auf seine Transparenz signifikante Vorteile gegenüber aus dem Stand der Technik bekannten Lösungen bieten kann.

Dabei kann das folgende Verfahren vollständig oder einzelne der Verfahrensschritte a) bis d) und insbesondere b) vorzugsweise unter Schutzgas, wie insbesondere Argon, ablaufen.

Das vorbeschriebene Verfahren dient somit dazu, einen Kompositwerkstoff zu schaffen, der eine transparente Matrix aufweist, die durch das Einfügen von Verstärkungsfasern eine Strukturverstärkung erfährt. Dabei kann das Material des Matrixwerkstoffs beziehungsweise des Kompositwerkstoffs nur in festem Zustand transparent sein, oder kann auch die Schmelze in transparentem Zustand vorliegen.

Unter einem auch als Verbundwerkstoff bezeichneten Kompositwerkstoff ist dabei in an sich bekannter Weise ein Werkstoff zu verstehen, der zwei oder mehr miteinander verbundene Materialien aufweist, wobei der Werkstoff andere Werkstoffeigenschaften besitzt als seine einzelnen Komponenten. Durch das Einbetten der Fasern in die Matrix liegt insbesondere ein Faserverbundwerkstoff als Kompositmaterial vor.

Unter einer transparenten Matrix ist ferner eine Matrix zu verstehen, bei welcher Licht, insbesondere im sichtbaren Bereich, bei einem Durchscheinen lediglich an der Oberfläche jedoch nicht oder zumindest nicht signifikant im Inneren reflektiert wird. Dabei sollten die Transmissionsverluste durch die Matrix zusammen mit den Verstärkungsfasern gering gehalten werden und etwa in einem Bereich von ≤ 10%, insbesondere ≤ 5%, beispielsweise in einem Bereich von ≥ 1% bis ≤ 10%, insbesondere in einem Bereich von ≥ 3% bis ≤ 5%, liegen, wobei sich das Vorbeschriebene insbesondere auf Licht im sichtbaren Bereich bezieht, also mit einer Wellenlänge von 390nm bis 790nm.

Ferner kann unter einem Werkstoff insbesondere ein meist formloses Basismaterial verstanden werden, um geformte und aus dem Werkstoff weiterverarbeitete Bauteile auszubilden, welche dann ein Endprodukt sein können.

Das vorbeschriebene Verfahren umfasst zunächst gemäß Verfahrensschritt a) das Bereitstellen einer Werkstoffmatrixschmelze. Die Werkstoffmatrixschmelze ist dabei insbesondere aus einem Material ausgebildet, welches die transparente Matrix ausbilden soll. Hierzu kann das Matrixmaterial grundsätzlich frei gewählt werden, insoweit es als Schmelze in für das nachfolgende Verfahren geeigneten Temperaturen darstellbar ist. Ferner sollte das Material zumindest in festem Zustand eine ausreichende Transparenz aufweisen.

Weiterhin umfasst das Verfahren gemäß Verfahrensschritt b) das Erzeugen von Verstärkungsfasern. Gemäß dem vorbeschriebenen Verfahren sollen dabei insbesondere derartige Verstärkungsfasern erzeugt werden, welche eine hohe Transparenz aufweisen. Dadurch kann es ermöglicht werden, dass die Transparenz des Matrixmaterials durch das Einbinden der Verstärkungsfasern nicht oder zumindest nicht signifikant reduziert wird.

Um dies zu erreichen werden gemäß dem vorbeschriebenen Verfahren insbesondere einkristalline Fasern aus nanostrukturiertem Siliziumcarbid erzeugt, wobei die Fasern insbesondere als 3C-SiC vorliegen können. Diese Fasern, insbesondere wenn sie in einem nachfolgend im Detail beschriebenen Verfahren erzeugt werden, erlauben in überraschender Weise eine besonders hohe Transparenz, wobei die Transparenz insbesondere gegenüber herkömmlichen, meist amorphen, Siliziumcarbidfasern weiter verbessert werden kann.

Hierzu umfasst das Verfahren zum Erzeugen der Verstärkungsfasern insbesondere die folgenden Verfahrensschritte.

Zunächst umfasst das Verfahren gemäß Verfahrensschritt b1) das Bereitstellen eines Gemisches mit einer Siliziumquelle und einer Kohlenstoffquelle wobei die Siliziumquelle und die Kohlenstoffquelle gemeinsam in Partikeln eines Feststoffgranulats vorliegen. Insbesondere kann es somit bevorzugt sein, dass jedes der Partikel des Feststoffgranulats eine Kohlenstoffquelle und eine Siliziumquelle aufweist. Die Siliziumquelle und die Kohlenstoffquelle dienen dazu, in dem weiteren Verfahren durch eine Reaktion der Kohlenstoffquelle mit der Siliziumquelle Siliziumcarbid herstellen zu können. Daher sollten die Siliziumquelle und die Kohlenstoffquelle derart gewählt werden, dass diese bei den nachfolgend beschriebenen Bedingungen, insbesondere bei den folgenden Temperaturen, etwa bei Normaldruck (1bar), durch das vorbeschriebene Verfahren Siliziumcarbid ausbilden können.

Insbesondere kann in dem Feststoff die Siliziumquelle reines Silizium oder Siliziumdioxid sein und kann in dem Feststoff die Kohlenstoffquelle reiner Kohlenstoff sein, wobei die Feststoffpartikel beispielsweise durch einen Sol-/Gel-Prozess ausbildbar sind, wie dies nachstehend im Detail beschrieben ist. Beispielsweis können die Feststoffpartikel aus Silizium, Kohlenstoff und gegebenenfalls einem Dotierstoff oder mehreren Dotierstoffen, wie dies nachfolgend beschrieben ist, bestehen, oder zumindest den größten Teil, etwa in einem Bereich von ≥ 90Gew.-% ausmachen.

Gemäß Verfahrensschritt b2) umfasst das Verfahren weiterhin das Behandeln des bei Verfahrensschritt b1) bereitgestellten Gemisches mit einer Temperatur in einem Bereich von ≥ 1400°C bis ≤ 2000°C, insbesondere ≥ 1600°C, beispielsweise in einem Bereich von ≥ 1650°C bis ≤ 1850°C, insbesondere in einem Reaktor. In diesem Verfahrensschritt wird es ermöglicht, dass sich Siliziumcarbid aus der Kohlenstoffquelle und aus der Siliziumquelle des Feststoffgranulats bildet.

In Abhängigkeit der exakten gewählten Temperatur kann dabei die konkrete Form des erzeugten Siliziumcarbids gesteuert werden. Im Detail können bei einer Einstellung der Temperatur in Verfahrensschritt b2) auf einen Bereich von ca. ≥ 1650°C bis ca.≤ 1700°C bei Normaldruck (1bar) in besonders vorteilhafter Weise nanostrukturierte Fasern des Siliziumcarbids geformt werden. Dabei kann das Ausbilden eines Temperaturgradienten von Vorteil sein, so dass das Material des Feststoffgranulats in die Gasphase übergehen kann an einer Position, die eine vergleichsweise höhere Temperatur aufweist und sich Siliziumcarbid-Fasern an der vergleichsweise geringeren Temperatur abscheiden können, wie etwa an einer Abscheideoberfläche. Somit kann insbesondere, um faserartiges Siliziumcarbid herzustellen, eine Abscheideoberfläche vorgesehen sein, welche verglichen zu der vorgenannten Temperatur eine verringerte Temperatur aufweist. Beispielsweise kann die Temperatur der Abscheideoberfläche um eine Temperatur verringert sein, die in einem Bereich von ≥ 50°C bis ≤ 100°C liegt, verglichen zu der grundsätzlich in dem Reaktor eingestellten Temperatur in dem vorgenannten Bereich von ≥ 1400°C bis ≤ 2000°C, insbesondere ≥ 1600°C, beispielsweise in einem Bereich von ≥ 1650°C bis ≤ 1850°C, insbesondere in einem Bereich von ca. ≥ 1650°C bis ca.≤ 1700°C. Insbesondere faserförmiges Siliziumcarbid weist den Vorteil auf, dass dieses als Verstärkungsfasern dienen kann und somit in idealer Weise in eine Matrix eingebracht werden kann, um so einen Verstärkungseffekt hervorrufen zu können.

Mit Bezug auf Fasern können dies insbesondere Gebilde sein, bei denen das Verhältnis von Länge zu Durchmesser mindestens größer oder gleich 3:1 ist, wohingegen in Abgrenzung zu Fasern bei Partikeln das Verhältnis von Länge zu Durchmesser kleiner als 3:1 ist. Beispielsweise kann in der vorliegenden Anmeldung bei den Fasern das Verhältnis von Länge zu Durchmesser auch bei größer oder gleich 10:1, insbesondere größer oder gleich 100:1, beispielsweise größer oder gleich 1000:1 liegen.

Im Anschluss an das Erzeugen der Siliziumcarbidfasern kann das vorbeschriebene Verfahren weiterhin gemäß Verfahrens schritt c) das Einbringen der Verstärkungsfasern in die Werkstoffschmelze aufweisen. Dies kann grundsätzlich in an sich bekannter Weise erfolgen, etwa durch geeignete Einstreuvorrichtungen und/oder geeignete Mischvorrichtungen.

Dabei kann eine Konzentration der Verstärkungsfasern insbesondere gewählt werden in Abhängigkeit der gewünschten Anwendung des auch als Faserverbundwerkstoff zu bezeichnenden Kompositwerkstoffs. Die Verstärkungsfasern liegen in der Matrix in einer Menge vor, die in einem Bereich von ≥ 2Vol.-% bis ≤ 60Vol.-%, insbesondere in einem Bereich von ≥ 2Vol.-% bis ≤ 20Vol.-% liegt. Dabei können die vorgenannten Bereiche beziehungsweise der Wert innerhalb der Bereiche abhängig sein von der Dicke und der Länge der Verstärkungsfasern.

Nach diesem Verfahrens schritt kann der Werkstoff bereits fertig gestellt sein und etwa als Schmelze vorliegen. Dabei kann der Werkstoff unmittelbar aus der Schmelze zu einem gewünschten Bauteil weiter verarbeitet werden.

Optional kann gegebenenfalls gemäß Verfahrensschritt d) ein Abkühlen der Werkstoffschmelze unter Ausbildung eines transparenten Feststoffes erfolgen, welcher dann den Kompositwerkstoff ausbildet. Dabei sollte ein Abkühlen derart ausgeführt werden, dass der so erzeugte Feststoff transparent wird. Dies kann beispielsweise realisierbar sein durch eine definierte Abkühlungsgeschwindigkeit, wie dies dem Fachmann für Glas oder Kunststoffe, beispielsweise, hinlänglich bekannt ist. Somit sind die Bedingungen für ein Abkühlen insbesondere einstellbar in Abhängigkeit des gewählten Matrixmaterials.

Insbesondere bei Glas als Matrixmaterial zeigt sich der Vorteil des Siliziumcarbids, da hier zum einen eine hohe Transparenz vorliegt und ferner die Fasern bis zu hohen Temperaturen stabil sind, so dass diese problemlos auch in eine Glasschmelze eingebracht werden können.

Insbesondere die vorbeschriebene Herstellung der Verstärkungsfasern kann es ermöglichen, mit Bezug auf transparente Kompositwerkstoffe besonders bevorzugte Verstärkungsfasen auszubilden.

Mit Bezug auf die vorbeschriebene Faserbildung kann es von Vorteil sein, dass durch das innige Gemisch etwa auf atomarer Ebene von Silizium und Kohlenstoff in dem Feststoffgranulat bereits in der Gasphase unter Umständen Si₂C und SiC₂ vorliegen kann, was zu einer leichteren Bildung von SiC an einem anderen Ort im Temperaturgradienten führt. Es kann also direkt ein Si-C-Gas vorliegen, wobei in für den Fachmann verständlicher Weise auch andere Gaskomponenten vorliegen können.

Dabei kann es ferner durch die Einstellung der Temperatur ermöglicht werden, dass das erzeugte Siliziumcarbid in der Form als Fasern einkristallin und dabei nanokristallin ist und im Detail eine kubische 3C-Struktur des Siliziumcarbids ermöglicht wird. Insbesondere, wenn das Siliziumkarbid (SiC) als Siliziumkarbid-Einkristall, vorzugsweise als monokristallines kubisches 3C-SIC vorliegt, vereinen die einkristallinen Siliziumkarbidfasern eine hohe thermische Leitfähigkeit, was vorteilhaft sein kann für bestimmte Anwendungen, wie dies nachfolgend im Detail beschrieben ist, sowie chemische und thermische Haltbarkeit, was für eine Langzeitstabilität von Vorteil ist, mit guten strukturverstärkenden Eigenschaften. Denkbar im Rahmen der vorliegenden Erfindung sind jedoch auch hexagonale Formen des Siliziumkarbids.

Ein wichtiger Punkt bei dem vorbeschriebenen Verfahren kann dabei die Nano-Skaligkeit der erzeugten Siliziumcarbid-Fasern sein. Dabei kann unter einem nanostrukturierten Siliziumcarbid insbesondere verstanden werden ein Siliziumcarbid, welches in wenigstens einer Dimension eine maximale räumliche Ausdehnung im Nanometerbereich, insbesondere von kleiner oder gleich 100nm, aufweist, wobei die untere Grenze durch das Herstellungsverfahren begrenzt sein kann. Insbesondere kann die Untergrenze bei den Fasern bestimmt werden kann durch die Temperatur am Wachstumsort, den eingestellten Temperaturgradienten und die Zeit zum Wachsen der Fasern.

Vorteilhaft ist das vorbeschriebene Verfahren ferner, da das erzeugte Siliziumcarbid unmittelbar nach der Herstellung direkt für die oben beschriebene Anwendung als Verstärkungsfasern geeignet ist. Dadurch, dass das Siliziumcarbid daher unmittelbar vor der Kompositmaterialherstellung erzeugt werden kann und ferner problemlos verfügbar ist, kann ein Ausbilden einer Siliziumoxidschicht (SiO₂) auf der Oberfläche des Siliziumcarbids verhindert werden. Somit bildet sich kein Material durch Oxidationsvorgänge aus, welches die Transparenz des Kompositmaterials herabsetzen könnte. Deren gezielte Entfernung ist durch eine unmittelbare Anwendbarkeit gerade nicht notwendig, Auf einen derartigen zusätzlichen Schritt kann gemäß der vorliegenden Erfindung gerade verzichtet werden, was das Verfahren besonders kostengünstig machen kann.

Gegenüber den erfindungsgemäß hergestellten Verstärkungsfasern besitzen herkömmliche, etwa amorphe, SiC-Fasern meist nur eine begrenzte Reinheit, wie etwa Reste an Kohlenstoff. Durch das vorbeschriebene Verfahren wird es dagegen möglich, hoch reine Siliziumcarbidfasern zu erzeugen, was die Transparenz des Kompositmaterials weiter erhöhen kann.

Grundsätzlich bieten Siliziumcarbidfasern dabei den Vorteil einer hohen Robustheit und Beständigkeit gegenüber einer Vielzahl von Chemikalien und Bedingungen, und sind ferner auch bei hohen Temperaturen von bis zu beispielsweise 2400°C stabil.

Dadurch, dass die bei einem vorbeschriebenen Verfahren erzeugten Fasern insbesondere kristallin sind, können die Eigenschaften mit Bezug auf Stabilität und Inertheit gegenüber Chemikalien und Bedingungen weiter verbessert werden.

Zusammenfassend wird es durch das vorbeschriebene Verfahren somit ermöglicht, eine einfache und kostengünstige Herstellbarkeit des Kompositmaterials mit einer hohen Transparenz und einer guten Stabilisierung zu vereinen.

In einer bevorzugten Ausgestaltung des vorbeschriebenen Verfahrens kann es vorgesehen sein, dass das in Verfahrensschritt b1) bereitgestellte Gemisch bereitgestellt wird unter Verwendung eines Sol-Gel-Prozesses. Unter einem Sol-Gel-Prozess ist dabei in an sich bekannter Weise ein derartiger Prozess zu verstehen, bei dem Ausgangsstoffe der zu erzeugenden Verbindung, die sogenannten Präkursoren, in einem Lösungsmittel vorliegen, wobei dieses Gemisch als Sol bezeichnet wird. Im Verlaufe des Verfahrens bildet sich durch Trocknung beziehungsweise Alterung ein sogenanntes Gel aus, woraus durch weitere Behandlung, insbesondere Temperaturbehandlung, ein Feststoff entstehen kann. Dieser Feststoff kann somit durch die Auswahl der Präkursoren definiert werden und enthält die Kohlenstoffquelle und die Siliziumquelle für die Siliziumcarbidbildung und kann ferner gegebenenfalls einen Dotierstoff zum Dotieren des Siliziumcarbids enthalten, welcher bereits bei der Zubereitung des Sols zugegeben werden kann.

Auch der Sol-Gel-Prozess kann dabei vollständig oder zumindest teilweise in einer Schutzatmosphäre, wie insbesondere in einer Argonatmosphäre, ablaufen.

Insbesondere mit Bezug auf eine Ausgestaltung des vorbeschriebenen Verfahrens durch einen Sol-Gel-Prozesses kann es vorgesehen sein, dass der Sol-Gel-Prozess zumindest die folgenden Verfahrensschritte aufweist:
e) Bereitstellen eines Präkursorgemisches mit einem Siliziumpräkursor, einem Kohlenstoffpräkursor und gegebenenfalls einem Dotierstoff, wobei das Präkursorgemisch in einem Lösungsmittel vorliegt;
f) Behandeln des Präkursorgemisches bei insbesondere zu der Raumtemperatur (22°C) erhöhter Temperatur unter Trocknung des Präkursorgemisches; und
g) gegebenenfalls Erhitzen des getrockneten Präkursorgemisches auf eine Temperatur in einem Bereich von ≥ 800°C bis ≤ 1200°C, insbesondere in einem Bereich von ≥ 900°C bis ≤ 1100°C.

Gemäß Verfahrensschritt e) können somit zunächst die Präkursoren bereitgestellt werden, welche zu einem Feststoff verarbeitet werden und anschließend als Kohlenstoffquelle beziehungsweise als Siliziumquelle dienen können, die in Verfahrensschritt b1) bereitgestellt beziehungsweise verwendet werden. Die Wahl der Siliziumquelle beziehungsweise der Kohlenstoffquelle beziehungsweise des Silizium-Präkursors und des Kohlenstoff-Präkursors ist somit nicht grundsätzlich beschränkt. Bevorzugte Siliziumpräkursoren können beispielsweise Silikate, wie etwa Tetraethylorthosilikat (TEOS), umfassen, wohingegen bevorzugte Kohlenstoffpräkursoren Zucker, wie etwa Saccharose, umfassen können, um die Feststoffpartikel auszubilden, welche als Kohlstoffquelle und Siliziumquelle in Verfahrensschritt b1) bereitgestellt beziehungsweise verwendet werden. Beispielsweise kann ein Gemisch aus Flüssigzucker und Tetraethylorthosilikat, gelöst in Ethanol, als Gemisch von Kohlenstoffpräkursor und Siliziumpräkursor bei Verfahrensschritt e) bereitgestellt werden, wobei die Erfindung in verständlicher Weise nicht auf die vorgenannten Beispiele beschränkt ist.

Dieses kann gemäß Verfahrensschritt f) beispielsweise in einem Temperaturbereich nahe dem Siedepunkt des Lösungsmittels, bei der Verwendung von Ethanol etwa in einem Bereich von 60-70°C, unter Luftabschluss zum gelieren gebracht beziehungsweise gealtert werden, wobei es ferner bei einer Temperatur oberhalb des Siedepunkts getrocknet werden kann. Dabei kann es von Vorteil sein, wenn beim Trocknen des Feststoffes Partikel entstehen, die einen maximalen Durchmesser in einem Bereich von etwa ≥1 µm bis ≤ 2mm liegen, wobei, wie dies vorstehend bereits angedeutet ist, Partikel in einem Größenbereich von > 10 µm bis ≤ 2mm für nanokristalline Siliziumcarbid-Fasern besonders bevorzugt sind. Die vorbenannten Größenbereiche haben dabei insbesondere prozesstechnische Vorteile, wie etwa ein Verhindern des Aufsteigens feinerer Partikel bei einer Faserherstellung. Eine derartige Partikelgröße kann beispielsweise ermöglicht werden durch einen Rührvorgang während des Trocknens, wobei die Partikelgröße etwa einstellbar sein kann durch das verwendete Rührwerk, eine Umdrehungsgeschwindigkeit und die Dauer beziehungsweise Stärke des Rührens, wie dies dem Fachmann grundsätzlich bekannt ist.

Gemäß Verfahrensschritt g) erfolgt anschließend gegebenenfalls ein Erhitzen des getrockneten Präkursorgemisches auf eine Temperatur in einem Bereich von ≥ 800°C bis ≤ 1200°C, insbesondere in einem Bereich von ≥ 900°C bis ≤ 1100°C, beispielsweise bei 1000°C. Durch diesen Verfahrensschritt kann der erzeugte Feststoff insbesondere von Verunreinigungen befreit werden, was das erzeugte Siliziumcarbid besonders rein gestalten kann. Dadurch kann die Qualität einer erzeugten Verstärkungsfaser und dadurch ihre Transparenz besonders hoch sein. Darüber hinaus kann eine Kristallisierung des Siliziumcarbids aus der Gasphase so verbessert werden.

Durch Verfahrensschritt f) beziehungsweise gegebenenfalls g) wird dabei das Gemisch gemäß Verfahrensschritt b1) bereitgestellt beziehungsweise fertiggestellt, wobei durch den vorbeschriebenen Sol-Gel-Prozess Partikel entstehen können, die jeweils eine Siliziumquelle, wie beispielsweise reines Silizium oder Siliziumdioxid, und eine Kohlenstoffquelle, wie etwa reinen Kohlenstoff, enthalten können. Bei Zusetzung eines Dotierstoffes während des Sol-Gel-Prozesses kann auch dieser in den Partikeln vorliegen, wie dies nachstehend im Detail beschrieben ist. Somit kann durch den Sol-Gel-Prozess ein Gemisch auf quasi atomarer ebene ermöglicht werden, was die Herstellung von Siliziumcarbid deutlich vereinfacht.

Zusammenfassend kann somit in einer Ausgestaltung ein Sol-Gel-Verfahren Anwendung finden, bei dem die zu verarbeitenden Materialien miteinander eine Mischung in Form eines Gels bilden und anschließend getrocknet werden, und in einem weiteren Schritt in einer carbothermalen Reduktion das Auskristallisieren des Siliziumcarbids, wie etwa das Wachsen der Fasern, abläuft. Der als Prozess an sich bekannte Sol-Gel-Prozess bietet eine gut beherrschbare und weit variierbare Möglichkeit der Herstellung unterschiedlichster Ausgangsmaterialien für die Herstellung des erfindungsgemäßen Fasermaterials oder von deren Vormaterialien. Eine Möglichkeit der Beeinflussung der Eigenschaften eines insbesondere mit Fasern gebildeten Kompositwerkstoffs ergibt sich, wenn die gebildeten Fasern bei einer Nachbehandlung in einem erneuten Sol-Gel-Verfahren miteinander vernetzt werden. Hierdurch wird aus den Einzelfasern durch die Vernetzung im Bereich der Berührungspunkte einzelner oder einer Vielzahl von Fasern ein fester und gleichwohl flexibler Verbund der Fasern gebildet, ohne dass mittels textiler Bearbeitungsschritte die Fasern miteinander verbunden werden müssen.

In einer weiteren bevorzugten Ausgestaltung des Verfahrens kann es vorgesehen sein, dass Verfahrensschritt b2) in einem Reaktor abläuft, der eine Abscheideoberfläche aufweist, dessen Temperatur relativ zu wenigstens einer weiteren inneren Reaktoroberfläche reduziert ist. Insbesondere in dieser Ausgestaltung kann auf besonders einfache Weise und ohne das Benötigen eines hohen apparativen Aufbaus es ermöglicht werden, dass sich Siliziumcarbid aus der Gasphase in der gewünschten Weise insbesondere als Fasern durch das Vorsehen eines Temperaturgradienten abscheidet. Denn durch den Kontakt mit der Abscheideoberfläche kann sich aus der Gasphase unmittelbar Siliziumcarbid abscheiden, ohne das es weiterer Mittel bedarf. Beispielsweise kann der Reaktor durch ein beispielsweise nach oben offenes Gefäß, wie etwa durch einen nach oben offenen Zylinder, ausgestaltet sein, in welchem die Präkursoren auf die vorbeschriebene Temperatur erhitzt werden. Oberhalb der beispielsweise nach oben gerichteten Öffnung kann die beispielsweise kreisförmige und etwa rotierbare Abscheideoberfläche etwa in dem Innenraum des Gefäßes angeordnet oder zu diesem ausgerichtet sein, so dass die Gasphase mit der Abscheideoberfläche in Kontakt kommen kann, wodurch sich hier das Siliziumcarbid, beispielsweise in Form von nanoskaligen Fasern, abscheiden kann.

Insbesondere mit Bezug auf den vorbeschriebenen Schritt kann es je nach der gewünschten Form des zu erzeugenden Siliziumcarbids vorteilhaft sein, dass, beispielsweise bei einem Trockenvorgang während des Sol-Gel-Prozesses, etwa durch ein Rühren, eine geeignete Partikelgröße des Feststoffs eingestellt wird, wie dies vorstehend mit Bezug auf Verfahrensschritt g) beschrieben ist. Beispielsweise kann es bevorzugt sein, wenn eine Partikelgröße entsteht, welche in einem Bereich von > 10µm bis ≤ 2mm beispielsweise in einem Bereich von ≥ 25µm bis ≤ 70µm liegt, um Siliziumcarbid-Fasern zu erzeugen.

Dabei kann es vorgesehen sein, dass die Abscheideoberfläche eine Temperatur aufweist, die relativ zu wenigstens einer weiteren inneren Reaktoroberfläche eine Temperatur aufweist, die um einen Betrag in einem Bereich von ≥ 30°C bis ≤ 200°C, vorzugsweise in einem Bereich von ≥ 50°C bis ≤ 100°C, verringert ist. In dieser Ausgestaltung kann das Abscheiden insbesondere von Siliziumcarbildfasern besonders effektiv ablaufen, wobei eine derartige Temperaturdifferenz ferner prozesstechnisch einfach einstellbar ist.

In einer weiteren vorteilhaften Ausgestaltung kann es ferner vorgesehen sein, dass die Verstärkungsfasern vor einem Einbringen in die Werkstoffschmelze oder in der Werkstoffschmelze mit einer Temperatur behandelt werden, die in einem Bereich von ≥ 2100°C liegt. Beispielsweise können die Verstärkungsfasern mit einer Temperatur behandelt werden, deren obere Temperatur begrenzt ist durch die Stabilitätseigenschaften der Fasern, welche bei etwa 2700°C sich zersetzen können, oder des Matrixmaterials. Eine besonders vorteilhafte Temperatur liegt in einem Bereich von ≥ 2100°C bis ≤ 2400°C. Durch eine derartige Temperaturbehandlung kann das beispielsweise als 3C-SiC vorliegende Siliziumcarbid insbesondere irreversibel umkristallisieren zu Siliziumcarbid der Form 6H-SiC. Insbesondere Siliziumcarbid in der Form von 6H-SiC kann auch im ultravioletten Spektralbereich sehr transparent sein, wobei die entsprechende Transparenz insbesondere im UV-Bereich signifikant höher sein kann, als von 3C-SiC.

Mit Bezug auf eine weitere bevorzugte Ausgestaltung kann es ferner vorgesehen sein, dass Die Verstärkungsfasern dotiert werden. Dies ist möglich unter Einbringen eines gewünschten Dotierstoffes in die Fasern, um so eine elektrische Leitfähigkeit ermöglichen zu können. Beispielsweise aber in keiner Weise beschränkend kann in Verfahrensschritt b1) ein Gemisch mit einer Siliziumquelle, einer Kohlenstoffquelle und einem Dotierstoff bereitgestellt werden, wobei die Siliziumquelle, die Kohlenstoffquelle und der Dotierstoff gemeinsam in Partikeln eines Feststoffgranulats vorliegen. Mit Bezug auf den Dotierstoff kann dieser ausgewählt werden auf Basis der gewünschten Dotierung. Der oder die Dotierstoffe können hierbei in grundsätzlich frei wählbarer Form, etwa in einem Herstellungsprozess des Feststoffgranulats als lösliche Verbindung beigegeben werden oder etwa elementar, beispielsweise metallisch, addiert werden. Somit kann der Dotierstoff ebenfalls Bestandteil sein des Feststoffgranulats gemäß Verfahrensschritt b1). Alternativ ist es aber auch denkbar, dass die Dotierung des sich bildenden Siliziumcarbids, etwa als sich bildende Fasern als 6H- oder 3C-Siliziumcarbid-Nanokristalle, wie dies nachstehend im Detail beschrieben ist, während der thermischen Behandlung über die Gasphase vorgenommen wird. Als Dotierungsmaterialien können für eine n-Dotierung bevorzugt Phosphor (P) oder Stickstoff (N) verwendet werden, oder können für eine p-Dotierung Bor (B) oder Aluminium (Al) verwendet werden. Durch die Dotierung kann dabei neben einer Verstärkungsfunktion eine besonders gute elektrische Leitfähigkeit der Verstärkungsfasern eingestellt werden.

Weiterhin kann, insoweit der Dotierstoff nicht in dem Feststoffgranulat aufweisend die Kohlenstoffquelle und die Siliziumquelle vorhanden ist und das Feststoffgranulat gemäß Verfahrensschritt a) in den Reaktor überführt wird, in welchem die Temperaturbehandlung gemäß Verfahrensschritt b2) stattfindet, der Dotierstoff etwa als Gas in den Reaktor gegeben werden, wobei sich die Mischung gemäß Verfahrensschritt b2) unmittelbar in dem Reaktor vor der Temperaturbehandlung ausbilden kann. Dies kann insbesondere dann von Vorteil sein, wenn der Dotierstoff als Gas vorliegen kann. Beispielsweise kann in diesem Fall gasförmiger Stickstoff als Dotierstoff dienen.

Von Vorteil ist es, wenn die Dotierungsmaterialien im nasschemischen Teil der Sol-Gel-Synthese eingebracht werden, wodurch die Dotierungsmaterialien während der thermischen Behandlung in die wachsenden Fasern oder die Partikel eingebaut werden. Die Dotierungsmaterialien können hierbei entweder als lösliche Verbindung beigegeben werden oder metallisch addiert werden. Alternativ ist es aber auch denkbar, dass die Dotierung der sich bildenden Fasern während der thermischen Behandlung über die Gasphase vorgenommen wird. Als Dotierungsmaterialien können wiederum bevorzugt Phosphor (P) oder Stickstoff (N) beziehungsweise Bor (B) oder Aluminium (Al) verwendet werden.

Insbesondere durch das Zusetzen eines Dotierstoffes kann es ermöglicht werden, dass die Siliziumcarbidfasern eine äußert gute elektrische Leitfähigkeit aufweisen. Dies kann das Anwendungsgebiet des erzeugten Kompositwerkstoffs beziehungsweise des daraus erzeugten Bauteile noch weiter erweitern. Im Detail können auf diese Weise Bauteile erzeugt werden, die nicht nur eine gute Stabilität, sondern auch eine gute elektrische Leitfähigkeit aufweisen. Dabei kann es insbesondere in dieser Ausgestaltung von der Erfindung gleichermaßen umfasst sein, dass der Fokus der erzeugten Bauteile nicht zwingend auf der Verstärkung liegt, sondern vielmehr auf der elektrischen Leitfähigkeit. Durch das Vorsehen der Fasern in dem Matrixmaterial ist dies jedoch trotzdem ein faserverstärkter Kompositwerkstoff.

Beispiele für durch einen Kompositwerkstoff in dieser Ausgestaltung erzeugbare Bauteile umfassen etwa transparentes Mikrowellenschutzglas, beispielsweise für Haushaltsmikrowellen, transparente Mikrowellenempfangsantennen aus transparentem Kunststoff oder Glas als Matrix, Fahrzeugscheiben, etwa beheizbar oder mit einer Empfangsantenne oder zur Ausbildung eines verbesserten Faradayschen Käfigs, Touch-Displays oder transparente Elektroden.

Für den Fall, dass die Fasern zwecks einer Leitfähigkeitsstruktur in der Matrix ausgerichtet werden sollten, kann dies beispielsweise durch elektrostatische Effekte realisiert werden.

Hinsichtlich weiterer Vorteile und technischer Merkmale des vorbeschriebenen Verfahrens zum Herstellen eines Kompositwerkstoffs wird hiermit explizit auf die Beschreibung des Verfahrens zum Herstellen eines Bauteils, des Kompositwerkstoffs, des Bauteils, der Verwendung sowie auf die Figur und das Beispiel Bezug genommen, und umgekehrt.

Gegenstand der vorliegenden Erfindung ist ferner ein Verfahren zum Herstellen eines transparenten Bauteils, wobei das Verfahren ein Verfahren zum Herstellen eines transparenten Kompositwerkstoffs umfasst, wie dieses vorstehend im Detail beschrieben ist, und wobei s der erzeugte Kompositwerkstoff zu einem Bauteil weiterverarbeitet wird. Dieser Verfahrensschritt dient somit insbesondere dazu, aus dem Kompositwerkstoff ein fertiges Bauteil auszubilden.

Die Weiterverarbeitung kann beispielsweise dadurch erfolgen, dass der Werkstoff etwa durch zerschneiden in eine gewünschte Form gebracht wird und/oder in eine geeignete Peripherie eingebracht wird. Ferner kann die Weiterverarbeitung grundsätzlich jeden geeigneten Schritt umfassen, welcher in für den Fachmann an sich bekannter Weise das Bauteil fertigstellen kann, wie etwa das Vorsehen geeigneter Strukturen, elektrischer Anbindungen oder ähnliches. Dies ist in für den Fachmann ohne weiteres verständlicher Weise abhängig von dem konkret geformten Bauteil.

Hinsichtlich weiterer Vorteile und technischer Merkmale des vorbeschriebenen Verfahrens zum Herstellen eines Bauteils wird hiermit explizit auf die Beschreibung des Verfahrens zum Herstellen eines Kompositwerkstoffs, des Kompositwerkstoffs, des Bauteils, der Verwendung sowie auf die Figur und das Beispiel Bezug genommen, und umgekehrt.

Gegenstand der vorliegenden Erfindung ist ferner ein faserverstärkter Kompositwerkstoff, aufweisend eine transparente Matrix, die Verstärkungsfasern aufweist, dadurch gekennzeichnet, dass der Kompositwerkstoff hergestellt ist nach einem Verfahren gemäß einem der Ansprüche 1 bis 7, wobei die Verstärkungsfasern eine Dicke in einem Bereich von ≥ 0,1µm bis ≤ 2µm aufweisen, wobei die Verstärkungsfasern aus Siliziumcarbid ausgebildet sind, wobei das Siliziumcarbid einkristallines 3C-SiC oder 6H-SiC ist, und wobei die Verstärkungsfasern in einer Menge von ≥ 2 Vol.-% bis ≤ 60Vol.-% vorliegen.

Ein derartiger Kompositwerkstoff weist insbesondere den Vorteil auf, dass er eine besonders hohe Stabilität aufweist. Dabei können die sehr guten Stabilitätseigenschaften des Siliziumcarbids in besonders vorteilhafter Weise verbunden werden mit einer hohen Transparenz der Fasern und damit des gesamten Kompositwerkstoffs. Durch einen vorbeschriebenen Kompositwerkstoff, aufweisend einkristallines Siliziumcarbid, etwa in Form von 3C-SiC oder 6H-SiC, kann es somit insbesondere ermöglicht werden, einen hochtransparenten Werkstoff zu schaffen, der Nachteile aus dem Stand der Technik bezüglich einer reduzierten Transparenz der Verstärkungsfasern nicht aufweist.

Darüber hinaus können die Verstärkungsfasern des Kompositwerkstoffs durch eine Dotierung der Fasern auf besonders einfache Weise derart ausgestaltet werden, dass sie eine hohe elektrische Leitfähigkeit aufweisen. Dadurch kann das Anwendungsbiet des Kompositwerkstoffs besonders breit gefächert sein und auch Anwendungen zulassen, die eine elektrische Leitfähigkeit der Fasern benötigen.

Die vorgenannten Vorteile lassen sich dabei insbesondere dadurch erzielen, dass der Kompositwerkstoff hergestellt ist nach einem Verfahren, das wie vorstehend im Detail beschrieben aus- und weitergebildet ist.

Die Verstärkungsfasern weisen eine Länge von mehreren Milimetern auf und eine Dicke beziehungsweise einen Durchmesser im Nanometerbreich bis Mikrometerbereich. Insbesondere kann es vorgesehen sein, dass die Verstärkungsfasern eine Länge in einem Bereich von ≥ 5mm bis ≤ 20mm aufweisen. Zusätzlich oder alternativ weisen die Verstärkungsfasern eine Dicke in einem Bereich von ≥ 0,1µm bis ≤ 2µm auf. Es wurde festgestellt, dass insbesondere Verstärkungsfasern mit den vorbeschriebenen Eigenschaften als verhältnismäßig kurze Fasern besonders ausgeprägte Verstärkungseigenschaften aufweisen. Somit können insbesondere Fasern mit den vorgenannten Parametern besonders hohe Stabilitätseigenschaften aufweisen.

Es kann ferner bevorzugt sein, dass das Matrixmaterial ausgewählt ist aus der Gruppe bestehend aus Glas und Kunststoff. Insbesondere die vorgenannten Materialien können eine hohe Transparenz aufweisen, so dass insbesondere bei diesen Materialien hochtransparente Verstärkungsfasern von Vorteil sein können.

In einer weiteren bevorzugten Ausgestaltung kann es ferner vorgesehen sein, dass die Verstärkungsfasern elektrisch leitfähig sind. Insbesondere durch das Vorsehen elektrisch leitfähiger Verstärkungsfasern lässt sich das Anwendungsgebiet des Kompositwerkstoffs weiter verbessern, so dass auch Anwendungen elektrisch leitfähiger und gleichzeitig hoch transparenter Materialien möglich wird. Beispielhaft und in keiner Weise beschränkend können die elektrisch leitfähigen Fasern eine Leitfähigkeit von 0,0005Ω⁻¹cm⁻¹ bis ≤ 1Ω⁻¹cm⁻¹, beispielsweise von ≥ 0,005Ω⁻¹cm⁻¹ bis ≤ 0,2Ω⁻¹cm⁻¹, aufweisen.

Hinsichtlich weiterer Vorteile und technischer Merkmale des vorbeschriebenen Kompositwerkstoffs wird hiermit explizit auf die Beschreibung der vorbeschriebenen Verfahren, des Bauteils, der Verwendung sowie auf die Figur und das Beispiel Bezug genommen, und umgekehrt.

Gegenstand der vorliegenden Erfindung ist ferner ein faserverstärktes Bauteil, wobei das Bauteil aus einem Kompositwerkstoff geformt ist, der wie vorstehend im Detail beschrieben ausgebildet und weitergebildet ist.

Ein derartiges Bauteil weist insbesondere den Vorteil auf, dass es durch den verwendeten Kompositwerkstoff eine besonders hohe Stabilität aufweist. Dabei können die sehr guten Stabilitätseigenschaften des Siliziumcarbids in besonders vorteilhafter Weise verbunden werden mit einer hohen Transparenz der Verstärkungsfasern und damit des gesamten Bauteils beziehungsweise der aus dem Kompositwerkstoff erzeugten Komponente. Ein vorbeschriebenes Bauteil, aufweisend einkristallines Siliziumcarbid, etwa in Form von 3C-SiC oder 6H-SiC, als Verstärkungsfasern kann hochtransparent sein und damit Nachteile aus dem Stand der Technik bezüglich einer reduzierten Transparenz der Verstärkungsfasern nicht aufweisen.

Beispielsweise kann das Bauteil ausgewählt sein aus der Gruppe bestehend aus einem transparenten Mikrowellenschutzglas, beispielsweise für Haushaltsmikrowellen, transparenten Mikrowellenempfangsantennen aus transparentem Kunststoff oder Glas als Matrix, Fahrzugscheiben, etwa beheizbar oder mit einer Empfangsantenne oder zur Ausbildung eines verbesserten Faradayschen Käfigs, Touch-Displays oder transparenten Elektroden oder allgemein faserverstärktems Glas oder faserverstärktem Kunststoff.

Hinsichtlich weiterer Vorteile und technischer Merkmale des vorbeschriebenen Bauteils wird hiermit explizit auf die Beschreibung des Kompositwerkstoffs, der Verfahren, der Verwendung sowie auf die Figur und das Beispiel Bezug genommen, und umgekehrt.

Gegenstand der vorliegenden Erfindung ist ferner die Verwendung eines Verfahrens, wie dies vorstehend im Detail beschrieben ist, zum Herstellen eines faserverstärkten Kompositwerkstoffs oder zum Herstellen eines faserverstärkten Bauteils.

Durch die vorbeschriebene Verwendung kann es insbesondere möglich werden, hochtransparente Verstärkungsfasern zu verwenden, die aufgrund vorzüglicher Verstärkungseigenschaften einen sehr stabilen und hoch transparenten Kompositwerkstoff beziehungsweise ein sehr stabiles Bauteil mit einem sehr breiten Anwendungsgebiet ermöglichen.

Hinsichtlich weiterer Vorteile und technischer Merkmale der vorbeschriebenen Verwendung wird hiermit explizit auf die Beschreibung des Kompositwerkstoffs, der Verfahren, des Bauteils sowie auf die Figur und das Beispiel Bezug genommen, und umgekehrt.

Nachfolgend wird die Erfindung anhand einer Figur und eines bevorzugten Ausführungsbeispiels exemplarisch erläutert, wobei die nachfolgend dargestellten Merkmale sowohl jeweils einzeln als auch in Kombination einen Aspekt der Erfindung darstellen können, und wobei die Erfindung nicht auf das nachfolgende Beispiel beschränkt ist.

Es zeigt:

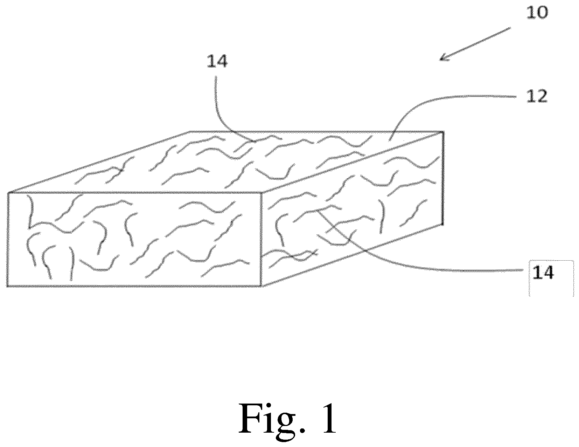

- Fig. 1: Eine Ausgestaltung eines Kompositwerkstoffs gemäß der vorliegenden Erfindung.

In der Figur 1 ist ein Kompositwerkstoff 10 gezeigt. Ein derartiger Kompositwerkstoff 10 umfasst eine transparente Matrix 12, die etwa aus Glas oder einem Kunststoff, wie beispielsweise Polymethylmethacrylat (PMMA, Plexiglas), geformt sein kann. In der transparenten Matrix 12 sind Verstärkungsfasern 14 angeordnet. Die Verstärkungsfasern 14 können beispielsweise in die Matrix 12 eingebracht werden, indem das Material der Matrix 12 aufgeschmolzen wird und die Verstärkungsfasern 14 darin verteilt werden. Dabei sind die Verstärkungsfasern 14 insbesondere Siliziumcarbidfasern, die aus einkristallinem 3C- SiC oder 6H-SiC ausgebildet sind.

Ein beispielhaftes Verfahren zum Erzeugen derartiger Verstärkungsfasern 14 ist in dem folgenden Ausführungsbeispiel beschrieben.

### Ausführungsbeispiel

Das nachstehend beschriebene Beispiel bezieht sich auf das Herstellen von Siliziumkarbid als Verstärkungsfasern 14 zum Herstellen eines transparenten Kompositwerkstoffs 10 unter Verwendung eines Sol-Gel-Prozesses.

Im Folgenden wird zunächst der Herstellungsprozess für nanokristalline SiC-Fasern unter Verwendung eines Sol-Gel-Prozesses beschrieben.

Herstellung des Sol-Gel-Si-C-Präkursors: Im Folgenden wird die chemische Zusammensetzung, Sol-Gel-Aufbereitung mit verschiedenen Trocknungsschritten bei 70°C bis 200°C, sowie abschließende Gewinnung des Si-C-Feststoffgranulates bei 1000°C beschrieben.

Flüssigzucker, Tetraethylorthosilikat und Ethanol werden zu einem Sol vermischt und bei 60 - 70°C unter Luftabschluss zum Gelieren gebracht. Die Zusammensetzung für einen Ansatz betrug (a) eine kolloidale Suspension aus 135g Tetraethylorthosilikat (TEOS) in 168,7g Ethanol gelöst als Siliziumquelle und (b) eine Lösung aus 68g Sacharose als Kohlenstoffquelle, in 75g destilliertem Wasser, der 37,15g Salzsäure (HCl) als Katalysator zum Ausbilden von Invertzucker hinzugefügt wird. Anschließend wurde Lösung (a) mit dem Flüssigzucker (b) unter Rühren miteinander vermischt. Alternativ kann anstatt der Lösung (b) auch direkt Flüssigzucker (Invertzucker, 122g 70%ig) verwendet werden. Dann wird kein Wasser zugesetzt und nur sehr wenig Salzsäure (5.2g), da diese nur noch zum Start des Gelierprozesses benötigt wird. Dieses Sol wird bei 50°C gealtert und anschließend bei 150 - 200°C getrocknet.

Für die Herstellung von SiC-Fasern wird vorzugsweise gröberes Granulat benötigt (einige 10 µm), so dass bei dem Altem und/oder bei dem Trocknen zeitweises Rühren erfolgt. Dieses Granulat beziehungsweise Pulver wird von verbliebenen ungewünschten Reaktionsprodukten bei 1000°C im Stickstoff- oder Argon-Gasstrom befreit und abschließend ggf. gemahlen. Nun kann eine Modifikation des SiC-Präkursors zum Zweck der Dotierung von SiC-Nanofasern und SiC-Nanopulvern erfolgen. Eine n-Dotierung kann etwa mit Stickstoff (beispielhafte Additive: Salpetersäure, Ammoniumchlorid, Kaliumnitrat oder Melamin), oder mit Phosphor (beispielhafte Additive: Kaliumdihydrogenphosphat oder Di-Natrium- hydrogenphosphat) erfolgen. Eine p-Dotierung kann beispielhaft mit Bor (beispielhafte Additive: Di-Natriumtetraborat) oder mit Aluminium (Add.: Aluminiumpulver) erfolgen. Die Dotierstoffe werden dem Sol beigegeben, die Mengen sind abhängig von dem konkreten Additiv und der gewünschten Dotierkonzentration.

Betreffend die Siliziumcarbid-Faser-Herstellung wird der entstandene Feststoff in einem Hochtemperaturreaktor geheizt, wobei das Granulat ab 1400°C, insbesondere ab 1600°C, in die Gasphase übergeht und sich einkristalline Siliziumkarbid-Fasern in einem Temperaturgradienten auf einem rotierenden Substrat abscheiden. Bevorzugte Fasern wachsen ab 1650°C bis 1700°C in der Gasphase beziehungsweise auf einer um ca. 50-100°C kühleren Abscheideoberfläche.

Betreffend eine Oberflächenmodifikation kann optional, um eine besonders hohe Leitfähigkeit des 3C-SiC zu ermöglichen, die Oberflächenleitfähigkeit erhöht werden neben einer Volumendotierung, die wie oben beschrieben während der SiC-Herstellung vorgenommen wird. Die Herstellung der höchstreinen Nanofasern kann in inerter Atmosphäre erfolgen. Alle darauffolgenden Produktionsschritte, wie etwa Einbetten in eine Matrix, können dann innerhalb weniger Stunden oder komplett unter Sauerstoffausschluss erfolgen, um eine Oxidation der Oberfläche zu verhindern.

Die so beschriebenen Fasern können in eine Schmelze eines transparenten Matrixmaterials eingebracht werden. Dazu kann beispielsweise eine an sich bekannte Streuvorrichtung verwendet werden und kann die Schmelze des Matrixmaterials gerührt werden. Nachdem die Fasern in der Matrix eingebettet sind, kann die Schmelze durch abkühlen erstarren.

## Patentansprüche

1. Verfahren zum Herstellen eines faserverstärkten transparenten Kompositwerkstoffs (10), aufweisend die Verfahrensschritte:
a) Bereitstellen einer Werkstoffmatrixschmelze; und
b) Erzeugen von Verstärkungsfasern (14), wobei Verfahrensschritt b) die Verfahrensschritte aufweist:
b1) Bereitstellen eines Gemisches mit einer Siliziumquelle und einer Kohlenstoffquelle, wobei die Siliziumquelle und die Kohlenstoffquelle gemeinsam in Partikeln eines Feststoffgranulats vorliegen;
b2) Behandeln des in Verfahrensschritt b1) bereitgestellten Gemisches mit einer Temperatur in einem Bereich von ≥ 1400°C bis ≤ 2000°C, insbesondere in einem Bereich von ≥ 1650°C bis ≤ 1850°C; unter Erzeugung von Verstärkungsfasern (14) mit einer Dicke in einem Bereich von ≥ 0,1µm bis ≤ 2µm, wobei die Verstärkungsfasern aus Siliziumcarbid ausgebildet sind, wobei das Siliziumcarbid einkristallines 3C-SiC oder 6H-SiC ist, wobei das Verfahren die weiteren Verfahrensschritte aufweist:
c) Einbringen der Verstärkungsfasern (14) in die Werkstoffschmelze derart, dass die Verstärkungsfasern in einer Menge von ≥ 2 Vol.-% bis ≤ 60Vol.-% vorliegen; und
d) gegebenenfalls Abkühlen der Werkstoffschmelze unter Ausbildung eines transparenten Kompositwerkstoffs (10).

2. Verfahren nach Anspruch 1, **dadurch gekennzeichnet, dass** das Matrixmaterial (12) ausgewählt ist aus der Gruppe bestehend aus Glas und Kunststoff.

3. Verfahren nach Anspruch 1 oder 2, **dadurch gekennzeichnet, dass** das in Verfahrensschritt b1) bereitgestellte Gemisch bereitgestellt wird unter Verwendung eines Sol-Gel-Prozesses.

4. Verfahren nach Anspruch 3, **dadurch gekennzeichnet, dass** der Sol-Gel-Prozess zumindest die folgenden Verfahrensschritte aufweist:
e) Bereitstellen eines Präkursorgemisches mit einem Siliziumpräkursor, einem Kohlenstoffpräkursor und gegebenenfalls einem Dotierstoff, wobei das Präkursorgemisch in einem Lösungsmittel vorliegt;
f) Behandeln des Präkursorgemisches bei erhöhter Temperatur unter Trocknung des Präkursorgemisches; und
g) gegebenenfalls Erhitzen des getrockneten Präkursorgemisches auf eine Temperatur in einem Bereich von ≥ 800°C bis ≤ 1200°C, insbesondere in einem Bereich von ≥ 900°C bis ≤ 1100°C.

5. Verfahren nach einem der Ansprüche 1 bis 4, **dadurch gekennzeichnet, dass** Verfahrensschritt b2) in einem Reaktor abläuft, der eine Abscheideoberfläche aufweist, dessen Temperatur relativ zu wenigstens einer weiteren inneren Reaktoroberfläche reduziert ist, insbesondere wobei die Abscheideoberfläche eine Temperatur aufweist, die relativ zu wenigstens einer weiteren inneren Reaktoroberfläche eine Temperatur aufweist, die um einen Betrag in einem Bereich von ≥ 30°C bis ≤ 200°C, vorzugsweise in einem Bereich von ≥ 50°C bis ≤ 100°C, verringert ist.

6. Verfahren nach einem der Ansprüche 1 bis 5 **dadurch gekennzeichnet, dass** die Verstärkungsfasern (14) vor einem Einbringen in die Werkstoffschmelze oder in der Werkstoffschmelze mit einer Temperatur behandelt werden, die in einem Bereich von ≥ 2100°C liegt.

7. Verfahren nach einem der Ansprüche 1 bis 6, **dadurch gekennzeichnet, dass** die Verstärkungsfasern (14) dotiert werden.

8. Verfahren zum Herstellen eines transparenten Bauteils, aufweisend ein Verfahren nach einem der Ansprüche 1 bis 7, wobei der erzeugte Kompositwerkstoff (10) zu einem Bauteil weiter verarbeitet wird.

9. Faserverstärkter Kompositwerkstoff, aufweisend eine transparente Matrix (12), die Verstärkungsfasern (14) aufweist, **dadurch gekennzeichnet, dass** der Kompositwerkstoff (10) hergestellt ist nach einem Verfahren gemäß einem der Ansprüche 1 bis 7, wobei die Verstärkungsfasern (14) eine Dicke in einem Bereich von ≥ 0,1µm bis ≤ 2µm aufweisen, wobei die Verstärkungsfasern (14) aus Siliziumcarbid ausgebildet sind, wobei das Siliziumcarbid einkristallines 3C-SiC oder 6H-SiC ist, und wobei die Verstärkungsfasern in einer Menge von ≥ 2 Vol.-% bis ≤ 60Vol.-% vorliegen.

10. Faserverstärkter Kompositwerkstoff nach Anspruch 9, **dadurch gekennzeichnet, dass** die Verstärkungsfasern (14) eine Länge in einem Bereich von ≥ 5mm bis ≤ 20mm aufweisen.

11. Faserverstärkter Kompositwerkstoff nach einem der Ansprüche 9 oder 10, **dadurch gekennzeichnet, dass** das Matrixmaterial (12) ausgewählt ist aus der Gruppe bestehend aus Glas und Kunststoff.

12. Faserverstärkter Kompositwerkstoff nach einem der Ansprüche 9 bis 11, **dadurch gekennzeichnet, dass** die Verstärkungsfasern (14) elektrisch leitfähig sind.

13. Faserverstärktes Bauteil, **dadurch gekennzeichnet, dass** das Bauteil einen Kompositwerkstoff (10) nach einem der Ansprüche 9 bis 12 aufweist.

14. Bauteil nach Anspruch 13, **dadurch gekennzeichnet, dass** das Bauteil ausgewählt ist aus der Gruppe bestehend aus einem transparenten Mikrowellenschutzglas, transparenten Mikrowellenempfangsantennen, Fahrzugscheiben, Touch-Displays oder transparenten Elektroden.

15. Verwendung eines Verfahrens nach einem der Ansprüche 1 bis 7 zum Herstellen eines faserverstärkten Kompositwerkstoffs (10) oder eines Verfahrens nach Anspruch 8 zum Herstellen eines faserverstärkten Bauteils.

## Claims

1. Method for producing a fiber-reinforced transparent composite material (10), comprising the process steps:
a) providing a material matrix melt; and
b) producing reinforcing fibers (14), wherein process step b) comprises the process steps:
b1) providing a mixture comprising a silicon source and a carbon source, wherein the silicon source and the carbon source are together present in particles of solid granules;
b2) treating the mixture provided in process step b1) at a temperature in a range from ≥ 1400°C to ≤ 2000°C, in particular in a range from ≥ 1650°C to ≤ 1850°C in order to produce reinforcing fibers (14) with a thickness in a range from ≥ 0.1 µm to ≤ 2 µm, wherein the reinforcing fibers being formed from silicon carbide, wherein the silicon carbide is monocrystalline 3C-SiC or 6HSiC, wherein the method comprises the further process steps:
c) introducing the reinforcing fibers (14) into the material melt in such a way that the reinforcing fibers are present in an amount of ≥ 2 vol.-% to ≤ 60 vol.-%; and
d) optionally cooling the material melt in order to form a transparent composite material (10).

2. Method according to claim 1, **characterized in that** the matrix material (12) is selected from the group consisting of glass and plastic.

3. Method according to claim 1 or 2, **characterized in that** the mixture provided in process step b1) is provided by use of a sol-gel process.

4. Method according to claim 3, **characterized in that** the sol-gel process includes at least the following process steps:
e) providing a precursor mixture comprising a silicon precursor, a carbon precursor and optionally a dopant, wherein the precursor mixture is present in a solvent;
f) treating the precursor mixture at an elevated temperature while drying the precursor mixture; and
g) optionally heating the dried precursor mixture to a temperature in a range from ≥ 800°C to ≤ 1200°C, in particular in a range from ≥ 900°C to ≤ 1100°C.

5. Method according to any one of claims 1 to 4, **characterized in that** process step b2) takes place in a reactor which has a deposition surface, the temperature of which is reduced relative to at least one further inner reactor surface, in particular wherein the deposition surface has a temperature that is reduced relatively to the temperature of at least one further inner reactor surface by an amount in a range from ≥ 30°C to ≤ 200°C, preferably in a range from ≥ 50°C to ≤ 100°C.

6. Method according to any one of claims 1 to 5, **characterized in that** the reinforcing fibers (14) are treated with a temperature in a range from ≥ 2100°C before being introduced into the material melt or within the material melt.

7. Method according to any one of claims 1 to 6, **characterized in that** the reinforcing fibers (14) are doped.

8. Method for producing a transparent component, comprising a method according to any one of claims 1 to 7, wherein the composite material (10) produced is processed further to a component.

9. Fiber-reinforced composite material comprising a transparent matrix (12), which comprises reinforcing fibers (14),
**characterized in that**
the composite material (10) is produced according to a method according to any one of claims 1 to 7, wherein the reinforcing fibers (14) have a thickness in a range from ≥ 0.1 µm to ≤ 2 µm, the reinforcing fibers (14) are formed from silicon carbide, the silicon carbide is monocrystalline 3C-SiC or 6H-SiC, and the reinforcing fibers are present in an amount of ≥ 2 vol.-% to ≤ 60 vol.-%.

10. Fiber-reinforced composite material according to claim 9, **characterized in that** the reinforcing fibers (14) have a length in a range from ≥ 5 mm to ≤ 20 mm.

11. Fiber-reinforced composite material according to any one of claims 9 or 10, **characterized in that** the matrix material (12) is selected from the group consisting of glass and plastic.

12. Fiber-reinforced composite material according to any one of claims 9 to 11, **characterized in that** the reinforcing fibers (14) are electrically conductive.

13. Fiber-reinforced component, **characterized in that** the component comprises a composite material (10) according to any one of claims 9 to 12.

14. Component according to claim 13, **characterized in that** the component is selected from the group consisting of a transparent microwave protective glass, transparent microwave reception antennas, vehicle windows, touch displays or transparent electrodes.

15. Use of a method according to any one of claims 1 to 7 for producing a fiber-reinforced composite material (10) or of a method according to claim 8 for producing a fiber-reinforced component.

## Revendications

1. Procédé de fabrication d'un matériau composite (10) transparent renforcé de fibres présentant les étapes de procédé :
a) de mise au point d'une matrice de matière fondue ; et
b) de création de fibres de renforcement (14), où l'étape de procédé b) comprend les étapes de procédé :
b1) de préparation d'un mélange avec une source de silicium et une source de carbone, où la source de silicium et la source de carbone sont présentes ensemble dans des particules d'un granulé solide ;
b2) de traitement du mélange préparé dans l'étape de procédé b1) à une température dans une plage ≥ 1400 °C à ≤ 2000 °C, notamment dans une plage ≥ 1650 °C à ≤ 1850 °C ; moyennant la création de fibres de renforcement (14) avec une épaisseur dans une plage ≥ 0,1 µm à ≤ 2 µm, où les fibres de renforcement sont constituées de carbure de silicium, où le carbure de silicium est un 3C-SiC ou un 6H-SiC monocristallin, où le procédé présente les autres étapes de procédé :
c) d'incorporation des fibres de renforcement (14) dans le matériau fondu de telle manière que les fibres de renforcement sont présentes dans une quantité ≥ 2 % en volume à ≤ 60 % en volume ; et
d) éventuellement, de refroidissement du matériau fondu moyennant la formation d'un matériau composite (10) transparent.

2. Procédé selon la revendication 1, **caractérisé en ce que** le matériau de matrice (12) est choisi dans le groupe constitué du verre et d'une matière plastique.

3. Procédé selon la revendication 1 ou la revendication 2, **caractérisé en ce que** le mélange préparé dans l'étape de procédé b1) est préparé moyennant l'emploi d'un processus sol-gel.

4. Procédé selon la revendication 3, **caractérisé en ce que** le processus sol-gel présente au moins les étapes de procédé suivantes :
e) la préparation d'un mélange de précurseurs avec un précurseur de silicium, un précurseur de carbone et éventuellement une substance de dopage, où le mélange de précurseurs est présent dans un solvant ;
f) le traitement du mélange de précurseurs à une température élevée moyennant le séchage du mélange de précurseurs ; et
g) éventuellement, le chauffage du mélange de précurseurs séché à une température dans une plage ≥ 800 °C à ≤ 1200 °C, notamment dans une plage ≥ 900 °C à ≤ 1100 °C.

5. Procédé selon l'une des revendications 1 à 4, **caractérisé en ce que** l'étape de procédé b2) se déroule dans un réacteur qui présente une surface de précipitation dont la température est réduite par rapport à au moins une autre surface de réacteur intérieure, notamment où la surface de précipitation présente une température qui présente une température relative par rapport à au moins une autre surface de réacteur intérieure qui est diminuée de l'équivalent d'une plage ≥ 30 °C à ≤ 200 °C, de préférence d'une plage ≥ 50 °C à ≤ 100 °C.

6. Procédé selon l'une des revendications 1 à 5, **caractérisé en ce que** les fibres de renforcement (14) sont traitées à une température qui se situe dans une plage ≥ 2100 °C, avant une incorporation dans le matériau fondu, ou dans le matériau fondu.

7. Procédé selon l'une des revendications 1 à 6, **caractérisé en ce que** les fibres de renforcement (14) sont dopées.

8. Procédé de fabrication d'un composant transparent, présentant un procédé selon l'une des revendications 1 à 7, où le matériau composite (10) fabriqué est ensuite transformé en un composant.

9. Matériau composite renforcé de fibres, présentant une matrice (12) transparente qui présente des fibres de renforcement (14), **caractérisé en ce que** le matériau composite (10) est fabriqué d'après un procédé selon l'une des revendications 1 à 7, où les fibres de renforcement (14) présentent une épaisseur dans une plage ≥ 0,1 µm à 2 µm, où les fibres de renforcement (14) sont conçues en carbure de silicium, où le carbure de silicium est un 3C-SiC ou un 6H-SiC monocristallin, et où les fibres de renforcement sont présentes dans une quantité ≥ 2 % en volume à ≤ 60 % en volume.

10. Matériau composite renforcé de fibres selon la revendication 9, **caractérisé en ce que** les fibres de renforcement (14) présentent une longueur dans une plage ≥ 5 mm à ≤ 20 mm.

11. Matériau composite renforcé de fibres selon l'une des revendications 9 ou 10, **caractérisé en ce que** le matériau de matrice (12) est choisi dans le groupe constitué du verre et d'une matière plastique.

12. Matériau composite renforcé de fibres selon l'une des revendications 9 à 11, **caractérisé en ce que** les fibres de renforcement (14) sont électriquement conductrices.

13. Composant renforcé de fibres, **caractérisé en ce que** le composant présente un matériau composite (10) selon l'une des revendications 9 à 12.

14. Composant selon la revendication 13, **caractérisé en ce que** le composant est choisi dans le groupe constitué d'un verre de protection contre les micro ondes transparent, d'antennes de réception de micro ondes transparentes, de vitres de véhicule, d'affichages tactiles ou d'électrodes transparentes.

15. Utilisation d'un procédé selon l'une des revendications 1 à 7 pour fabriquer un matériau composite (10) renforcé de fibres ou d'un procédé selon la revendication 8 pour la fabrication d'un composant renforcé de fibres.
